# EUROPEAN PATENT SPECIFICATION

(11) **EP 2 796 802 B1**
(45) Date of publication and mention of the grant of the patent: **16.03.2016**
(21) Application number: 14425037.0
(22) Date of filing: 21.03.2014
(51) Int. Cl.: F28F 21/06, F24F 13/30, B01D 53/26, F28F 13/00, F24F 5/00, F24F 3/14, F24F 3/147, B01D 53/06, F28D 5/00

(54) **Contactor having planar, hydrophobic membranes and integrated in components of thermal exchange**
In Komponenten zum Wärmeaustausch integrierter Schütz mit flachen, hydrophoben Membranen
Contacteur comportant des membranes hydrophobes planes et intégré dans des composants d'échange thermique

(30) Priority: 26.04.2013 IT RM20130250
(43) Date of publication of application: 29.10.2014
(73) Proprietor: UNIVERSITA DEGLI STUDI DI GENOVA, 16126 Genova (IT)
(72) Inventor: Nannei, Enrico, 6126 Genova (IT); Capannelli, Gustavo, 6126 Genova (IT); Bottino, Aldo, 6126 Genova (IT); Isetti, Carlo, 6126 Genova (IT)
(74) Representative: Perronace, Andrea

(56) References cited:
- DE-A1- 19 545 335
- DE-A1-102009 053 629
- US-A- 5 514 248
- US-A1- 2002 078 696

## Description

The present invention concerns a contact module with hydrophobic planar membranes integrated in thermal exchange components.

More in detail, the present invention concerns a contactor realising the airflow through rectangular modular elements made of suitable material and apt to support, on the two opposite faces, sheets of heat-sealed/glued micro-porous membrane. Said modules substitute the membrane capillary conduits of the contactor module (CMC) or combined membrane contactor disclosed in the document WO2012/042553, here included integrally by reference and claiming the priority of the Italian patent application No. RM2010A000508 of September 30, 2010. In such a module of the prior art, the flow of the process air in the lumen of the membrane capillaries occurred in conditions of laminar regime, therefore with limited mass and heat transport coefficients of the air (Nusselt and Sherwood numbers equal to 7.54 for a completely developed laminar motion). Moreover, with self-supporting capillary conduits, in order to advantageously reduce as much as possible the thickness of the membrane, it has necessarily to be made reference to external diameters of the capillaries shorter than 1 mm which entail high load losses and/or reduced flow rates. The CMC of the prior art shows itself therefore not sufficiently compact and of complex industrial realisation in relation to the necessary high number of capillaries and the required precision of insertion. Another example of contact module according to the preamble of claim 1 is disclosed in document US-A-5514248.

It is subject-matter of the invention a contact module operating with three fluids, air, thermovector fluid and a liquid phase, said contact module comprising a plurality of plates within which conduits are made for the thermovector fluid, for example frigorific evaporating fluid, said plurality of plates being disposed in a parallel way thus forming a succession of pairs of plates, the contactor being characterized in that within at least a pair of plates there are:
- a first and a second hydrophobic, planar membrane separated and supported by spacing and support means configured to allow the passage of process air perpendicularly to the direction of main extension of said pair of plates,
- between said first and second hydrophobic, planar membrane and the respective external surface of said two plates a space is present for the flow of the liquid phase,
at the opposite ends of said plurality of plates being placed respective collectors for the collection of the refrigerant fluid and the liquid phase.

Of course, the space between every two plates of the module can thus be filled, or the space within a number of pairs smaller than the total number of participating pairs.

The spacing and supporting means are to be understood as shaped in such a way to allow the contact between the process air and said first and second hydrophobic membrane. For example, the spacing means can be constituted by a frame presenting (wide) apertures in contact with above-mentioned first and second hydrophobic membranes.

According to an advantageous aspect of the present invention, on two opposite faces of the contact module, at the ends of said spacing and support means in the direction perpendicular to said plurality of plates, a closing material is disposed, for example a hardening resin, to incorporate the end parts of said spacing and support means and seal the spaces between said spacing and support means and those plates facing them.

Said spaces make the transit of the liquid phase possible, which laps said hydrophobic planar membranes externally to the membranes without being able to penetrate inside them by the hydrophobic nature of their material.

According to an advantageous aspect of the invention, said spacing and support means are constituted by a plurality of spacing elements substantially perpendicular to said first and second hydrophobic, planar membrane.

According to an advantageous aspect of the invention, said spacing and support means are constituted by a frame having height between 1 and 10 mm and a length substantially equal to the length of the plates or a integer fraction thereof.

According to an advantageous aspect of the invention, said liquid phase contains a desiccant solution for the dehumidification and/or cooling of process air, and/or water for humidification of process air.

According to an advantageous aspect of the invention, between said first and second hydrophobic, planar membrane and the external surfaces of said pair of plates a suitable network is placed, for example in plastic material.

According to an advantageous aspect of the invention, the spaces between the plates are only partially occupied by the layer formed by said first and second hydrophobic, planar membrane and said spacing and support means, the non-utilized spaces along the direction of main extension of said plurality of plates being provided with fins to increase the sensible thermal exchange with air.

It is further, specific subject-matter of the present invention an integrated plant for the dehumidification and conditioning of air, comprising:
- a conditioning and/or dehumidification unit for the dehumidification and cooling of the air by means of a desiccant solution,
- cooling means, connected to said conditioning and/or dehumidification unit, suitable to feed said conditioning and/or dehumidification unit with the refrigerant fluid,
   characterized in that:
   - said conditioning and/or dehumidification unit is the contactor module according to the invention;
   - a regeneration unit for the regeneration of said a desiccant solution is comprised, which is connected to the conditioning and/or dehumidification unit;
   - said regeneration unit is suitable to reconcentrate said desiccant solution that comes from the conditioning and/or dehumidification unit where it has been diluted by contact with humidity, discharging outside water and using for such a reconcentration process the condensation thermal energy of the refrigerant fluid, or the energy provided by another thermovector fluid, the reconcentrated desiccant solution being finally returned to said conditioning and/or dehumidification unit.

According to an advantageous aspect of the invention, said regeneration unit comprises a liquid/liquid membrane distillator of the type DCMD/AGMD or thermal recovery AGMD.

According to an advantageous aspect of the invention, said regeneration unit is constituted by a further contactor module according to the invention.

According to an advantageous aspect of the invention, when the contactor module is the contactor module according to the invention, said refrigerating means feed further separate condensation coils and evaporation coils as well.

According to an advantageous aspect of the invention:
- said conditioning and/or dehumidification unit dehumidifies a part of the air flow which is subsequently collected and mixed up with the non-dehumidified part so as to create an air mixture,
- said air mixture is cooled down with an exchange coil arranged in series on the air pathway, the exchange coil being fed with a part of the flow of refrigerant fluid coming from said cooling means;
- said regeneration unit operates in parallel with a condensing coil;
- the exchange of desiccant solution between said conditioning and/or dehumidification unit and said regeneration unit, to the end of regenerating the desiccant solution, is effected through suitable conduits.

According to an advantageous aspect of the invention:
- the evaporation temperature of the frigorific fluid is the same in said conditioning and/or dehumidification unit and in said separate exchange battery;
- the condensation temperature of the frigorific fluid is the same in said regeneration unit and in said separate condensation coil.

According to an advantageous aspect of the invention, when the contactor module is the contactor module of the invention, said cooling means do not comprise the evaporation coil external to the CMCP contactor module, wherein the non-occupied space operates as a traditional refrigerating coil arranged in parallel.

According to an advantageous aspect of the invention, when the contactor module is the contactor module according to the invention, said cooling means do not comprise a condensation coil external to the CMCP contactor module, wherein the non-occupied space operates in parallel as traditional condensation battery.

It is further specific subject-matter of the present invention a free cooling plant for rooms, c0omprising a free cooling unit for the production of free cooled water for supplying suitable radiant panels to the end of realizing internal comfort conditions in said rooms, said free cooling rooms utilizing a contact module using three fluids, air, thermovector fluid and liquid phase, the plant being characterized in that:
- the contact module is the contact module according to the invention;
- the liquid phase is water that cools by humidifying the air crossing the contact module;
- the refrigerant fluid supplies in closed circuit said radiant panels and is constituted by water.

The invention will be now described by way of illustration but not by way of limitation, with particular reference to the drawings of the enclosed figures, wherein:
- figure 1 shows a typical commercial evaporator, wherein one can see the metallic plates between which conduits are obtained, through which the refrigerant flows and to which metallic foil fins are welded externally;
- figure 2 shows a non-limiting example of a possible polypropylene frame supporting on a side a heat-sealed membrane sheet whilst on the opposite side it is provided with suitable spacing elements apt to allow the air transversal flow, according to the invention;
- figure 3 shows a portion of module as obtained by coupling the two frames of figure 2 in such a way to realise the reciprocal contact between said spacing elements and allow the transversal process air flow, according to the invention;
- figure 3a shows an example of half-frame, for the spacing of the hydrophobic membranes, utilised in figure 3;
- figure 4 shows a possible spacing net in plastic material to be inserted between said membranes and the external surfaces of the plates, according to the invention;
- figure 5 shows an embodiment of a commercial evaporator with the modules according to the invention inserted between said plates of the refrigerant fluid;
- figure 6 shows an integrated plant of dehumidification/conditioning of the air according to the prior art (patent application No. RM2009A000672 with title: "integrated plant for conditioning and the modification of air", filed by University of Genoa on December 21, 2009);
- figure 7 shows an integrated plant with two CMC (dehumidifier and regenerator) according to the invention, this plant is particularly suited for the dehumidification of air;
- figure 8 shows a different embodiment of an integrated plant with two CMC (dehumidifier and regenerator) according to the invention;
- figure 9 shows on the psycrometric diagram (Ashrae diagram) how the transformations of process air occur in the system of figures 6 and 7; and
- figure 10 shows a block diagram of a further, different summer cooling plant realisable with the contactor according to the invention.

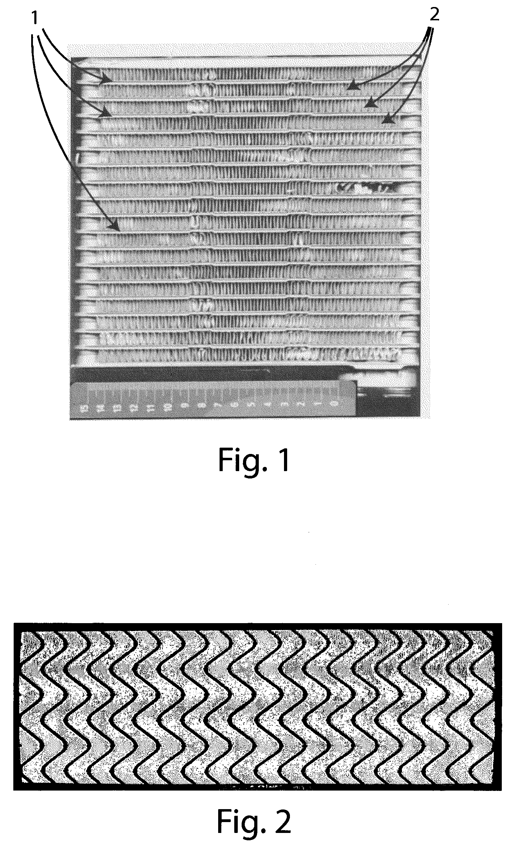

In figure 1, one gives the photo of a typical commercial evaporator. The plates 1 are well recognisable, between which the conduits for the refrigerant are obtained (horizontal in the disposition of figure 1). On the plates 1, metallic sheet fins 2 are welded, which allow an increased surface of exchange with the process air which flows perpendicularly.

The improvement of the invention is described in the following.

Figure 2 shows a non-limiting example of a possible polypropylene supporting frame with a heat-sealed membrane sheet. On the photo, the undulated supports are recognisable, which support the membrane at the top and at the bottom.

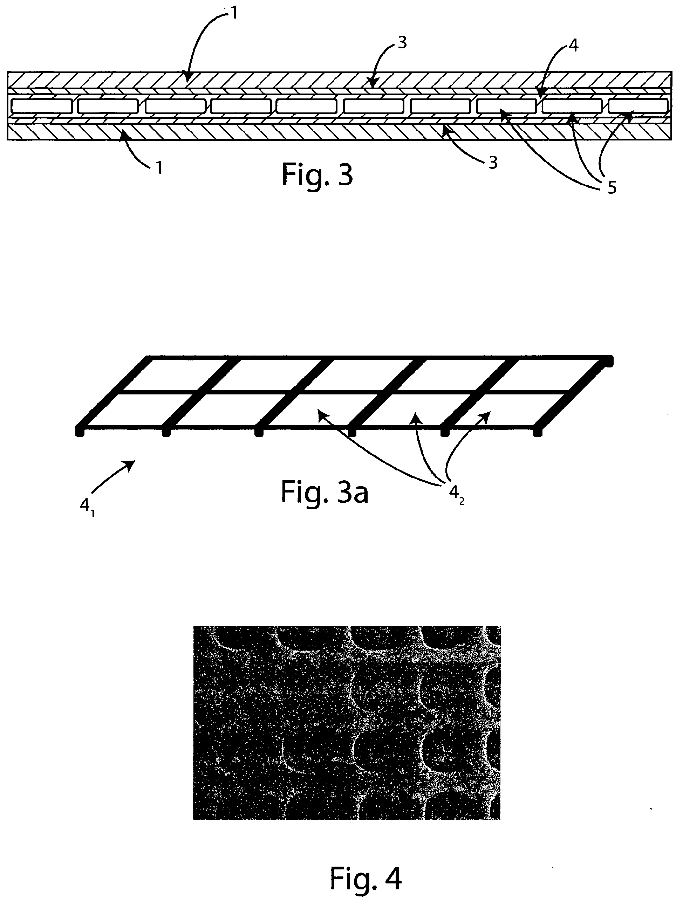

With reference to fig 3, by coupling two frames (for example by heat-sealing) one can realise a module 4 having the same length or an integer fraction of such length and the same depth of the plates 1 of the refrigerant. The membranes 3 are then held taut between said plates 1 and module 4. The module 4 is a spacer, i.e. it is not closed with respect to the membranes 3, but presents apertures for the contact of the air with the membranes 3. These apertures are for example apertures of a frame that has been intended only to support the membranes 3 without constituting a physical separation with the membranes, except in the zones of the elements constituting the frame and forming between each other the above apertures, as for example it is shown in figure 3a, wherein with the reference 4₁ a spacing half-frame is shown according to the invention. Two facing, juxtaposed half-frames 4₁ form for example the spacer 4 of figure 3. With the reference 4₂, the apertures of the frame for the contact process air-hydrophobic membrane (and therefore air-liquid phase-thermovector fluid) are indicated.

The so formed module presents paths 5 for the air. These paths can be indifferently sealed or communicating.

Since the modules are sealed on two opposite ends, parallel to the air path, the motion of the process air realises therefore within a series of undulated rectangular conduits which are sealed, on the largest side, by two opposite membrane faces and, on the shortest side, by undulated supports (in a non-limiting way) supporting the membranes. The mentioned conduits for the air flow are indicatively characterised by a (nonlimiting) height of around 2-8 mm and (nonlimiting) width of around 15-20 mm. Figure 3 shows a portion of a module realised with two juxtaposed, facing polypropylene frames. The plastic material is highlighted bright gray to the end of highlighting rectangular sections of the input of the air, formed by the facing juxtaposition of said frames spacing elements.

Obviously, different forms of supports can be adopted (which in generally will be spacing and supports means for the membranes), even not sealed on the shortest sides because it is not necessary to hinder the mixing of the air between adjacent conduits. On the two external faces of each module above the membrane sheets, a suitable spacing net in plastic material will be added. The net interposed between the membrane and the metallic surface of the plates will allow the liquid phase to flow uniformly on the whole section. Figure 4 shows a possible spacing net in plastic material.

The so completed modules can therefore be inserted in the free spaces between the plates 1.

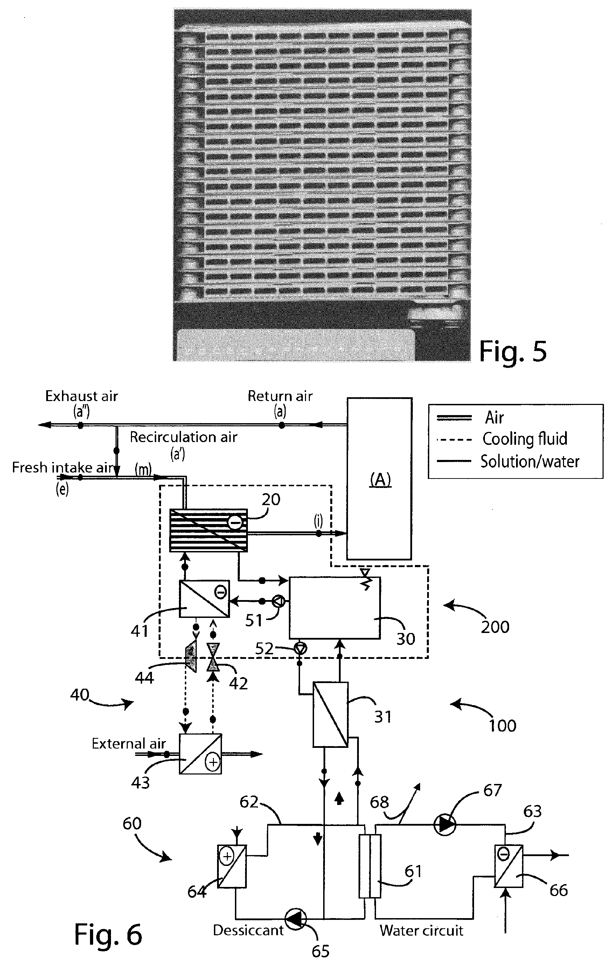

Figure 6 shows, by way of example, the photo of the commercial evaporator with the above-mentioned modules inserted between the conduits of the refrigerant fluid according to the improvement of the invention.

A suitable hardener resin is cast on the two opposite faces of the component in order to incorporate the end parts of the modules and seal the space between the modules and the walls of the plates 1. The liquid phase (desiccant or water) flows through the spacing nets lapping the external surface of the membranes without being able to penetrate inside the single module because of the hydrophobic nature of the microporous material membrane. The two opposite faces of resin undergo suitable mechanical operations in order to remove any obstacle to the passage of the air to be dehumidified and/or cooled down or to be humidified. It is to be remarked that it is always possible to use commercial evaporation/condensation batteries.

As described in the previous patent, it is also possible to construct components that are only partially modified according to the invention (CMCP components with still part of the plates provided with fins).

The improvement introduced by the invention entails decisive advantages with respect to the previous component, improving its compactness thanks to the higher heat and mass exchange coefficients for the air in the turbulent regime in the conduits (the experimental tests effected at the University of Genoa confirm the achievement of values of Nusselt and Sherwood numbers for the air of around 5-6 times larger than for the previous component). Even the load losses for the air come out to be, with the equal dimensions, remarkably reduced with respect to the previous capillaries contactor. These aspects are of particular importance for the application to the conditioning/dehumidification of the air on motor vehicles and transport means. Thanks to this innovation, the plant application of these components come out to be more interesting in relation to the fact that the production of the membrane modules can easily be industrialised and made in great series, as well as one can use them as basis for the realisation of CMC heat exchange components of industrial production (evaporators/condensers, heat exchangers).

The new CMC contactor presents, with respect to the previous one described in WO2012/042553, the following advantages:
a) the through-airflow is now in the turbulent regime and not laminar any longer, therefore with mass and heat transport coefficients of the air that are much larger;
b) thanks to this improvement, the conduits for the air (rectangular section) can be delimited by thin membranes (100-200 mm) without having necessarily to adopt, with self-supporting capillaries, diameters shorter than 1 mm entailing high load losses and/or reduced flow rates;
c) the new component, the performances being equal, comes out to be definitely more compact;
d) the large-scale industrial realizability proves definitely simpler and less expensive.

The new planar membrane contactor module can be utilized advantageously for all the applications already described in the previous patent application. The possibility of simplifying the architecture of plants combining vapour-compression cycles (freezer) with liquid desiccants (hybrid plants) is recalled In the previous patent application, a hybrid plant was described, which is provided of these components. The adoption of more compact CMC will make air treatments more interesting and energetically convenient, such as the air dehumidification and conditioning with hybrid plants (conditioning of civil and industrial ambient, conditioning of transport means, hygrometric control of confined interiors, refrigeration domain, etc.).

In the domain of the air treatment, besides the dehumidification of the air and the ambient conditioning, one recalls that the invention can have a number of further applications: for example, the CMC component can be utilized as evaporative condenser by using water as liquid phase to reduce, thanks to the intense latent heat exchange with ambient air, the condensation temperature of the refrigerating cycle, improving its energetic efficiency (more favourable COP values).

In a traditional evaporative condenser, the refrigerant enters in form of overheated vapour in the coil. Water is pumped in the upper part of the unit and sprayed on the coil, whilst air is blown in the lower part. The droplets cross the air flow and evaporate when in contact with the refrigerant coil, whilst the temperature of the external surface of the coil tends to assume the temperature of air humid bulb. A traditional evaporative condenser comes out to be rather bulky and not adapted for the use on movable systems whilst a CMC contactor utilized as condenser can realise compactness and high thermal exchange efficiency with the possibility of use also in plants of small size.

Another possible filed of use of CMC components concerns the possibility to realize, in residential rooms, summer comfort conditions avoiding resorting to the traditional air conditioning systems using freezer cycles.

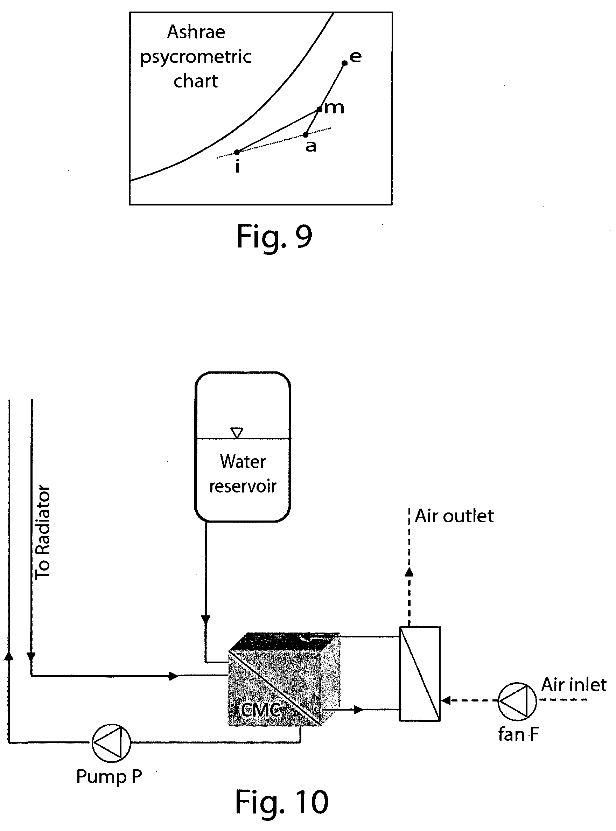

As represented in Fig. 10, with a CMC operating with external air and realizing water evaporation from a reservoir, one can produce water with temperature of some degrees lower (2-6°C) than the external air temperature and use it to feed a radiating panel placed on the roof of a building.

Another possible use concerns the reduction of the phenomena of frosting on the batteries to cool down the air in the domain of preservation of food (for example freezer warehouses, refrigerated transportations).

Making reference to figure 6, the integrated plant 100 of dehumidification/conditioning of the air described in patent application RM2009A000672 is illustrated. Such a plant allows the control of the climate conditions within a confined room A, such as civil/industrial room or a cockpit of moving means such as cars, etc.

The air in the thermodynamic state (m), as results from the mixing of the fresh air (e) and recirculation air (a'), is cooled down and dehumidified by means of the integrated plant 100 till the conditions of introduction (i) in the conditioned interior A are fulfilled.

The plant 100 comprises a conditioning/dehumidification unit 20 that provides the cooling and dehumidification of the fresh air (e) and recirculation air (a'), and a reservoir 30 connected to it for the recollection of the desiccant solution.

The plant 100 further comprises refrigerating means 40, provided with an evaporator 41, a lamination valve 42, a condenser 43 and a compressor 44. Such evaporator 41 is connected to said reservoir 30 by means of a first pump 51.

The plant 100 comprises also an economizer 31 connected by a pair of supply and return conduits wherein the circulation is determined by a second pump 52. Said economizer 31 can also be connected to a ring between the reservoir 30 and the evaporator 41. To said economizer 31, moreover, re generation means 60 are connected which comprise a membrane distillator 61, disposed between the desiccant regeneration circuit 62 and the distilled water circulation circuit 63.

The re generation means 60 are suitable to reconcentrate said desiccant solution that has been diluted and coming from said conditioning/dehumidification unit 20, extracting from it water by utilizing thermal energy obtained from a thermal source, the thus re-concentrated solution being finally returned in said reservoir 30.

Said membrane distillator module 61 is of the liquid-liquid type, for example of the type DCMD ("Direct Contact Membrane Distillation") or even of the air-gap AGMD type (Air-Gap Membrane Distillation).

Advantageously, as described in the first patent application RM2009A000672, the regeneration section can be simplified by using a membrane distillator of the air-gap type (AGMD - Air-Gap Membrane Distillation) with heat recovery.

As for the functioning of the plant, it is here referred to the description of the patent application RM2009A000672.

As can be observed, in the dehumidification circuit of the just described plant the following components disposed in series were provided: desiccant reservoir, circulation pump, refrigerator evaporator, membrane contactor, the assembly of these elements having been indicated by reference 200 in figure 6.

According to the present invention, this whole circuit 200 (dehumidification) can be substituted by the only CMC component that treats the air to be introduced in the ambient and that is connected by supply and return conduits to the regeneration section.

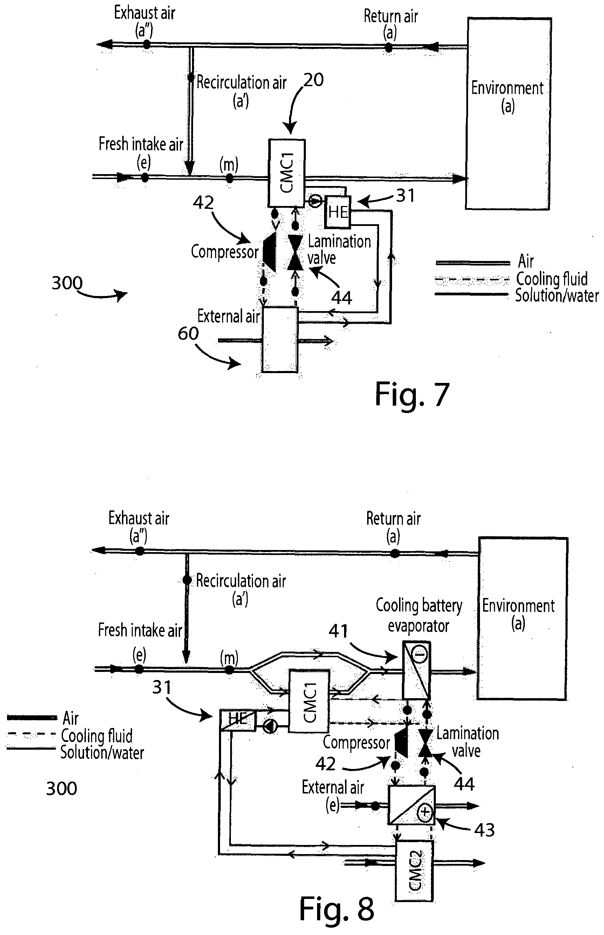

A sensor, sensible to the concentration of the solution or more simply to the pressure of the solution contained in the dehumidification CMC, allows to activate, when necessary, the exchange of solution with the regeneration system. This, as already recalled, can be realized both by membrane distillation processes and exploiting the innovative simplification potentials of the present invention, i.e. by realizing the solution exchange with a second regeneration CMC (cf. figure 7), using the condensation heat of the refrigeration cycle. Also the regeneration system can indie be substituted with a CMC that will be operated in this case as a regenerator.

In this case, the mass and thermal exchanges occur in the inverse direction and the absorbed water is discharged in the external air flow crossing the regeneration CMC. Advantageously according to the invention, as represented in figure 7, between the two CMC a heat exchanger (HE economizer) can be disposed. The solution exchange through said conduits can be realized by natural convention because of the different temperatures of the solution present in the dehumidification CMC (CMC1) and in the regeneration CMC (CMC2), or the desiccant solution can be moved by a pump controller by the mentioned sensor. This plant is particularly suited for the dehumidification of air.

In all cases, in the solution circuit a suitable expansion vessel/reservoir will have to be inserted (not shown in figure).

In case it is needed to realize, besides the air dehumidification, its sensible cooling as well, it is proper to make reference to the plant structure illustrated in figure 8. This structure combines the high efficiency of the CMC components in the realization latent exchanges with the sensible exchange high efficiency allowed by the traditional thermal exchange coils.

As can be observed in figure 8, the CMC1 component dehumidifies a portion of the recirculation air flow that is therefore mixed up with the remaining part. The dehumidified mixture that therefore does not contain the relevant latent load is then cooled down by a traditional exchange coil fed with a portion of the refrigerant flow rate of the refrigeration cycle. It is here observed that the fluid evaporation temperature is the same in the CMC1 and in the cooling coil. In a similar way the CMC2 component operates in parallel with a traditional condensation coil (even in this case the condensation temperature is identical in the two components). Obviously the condensation of the coolant fluid, instead of occurring in two parallel separated components (CMC and condensation coil), can occur in an only CMCP component.

### Bibliography

1. Isetti, C., Nannei, E., Orlandini, B et al. 2011. Sensible and latent heat exchangers to improve energy efficiency of AC systems. In: 4th European Workshop Mobile Air Conditioning and Vehicle Thermal Systems, 1-2 December Turin.
2. Isetti, C. et al, 2012. Contactor module with hydrophobic capillary membrane integrated in a heat exchanger and hybrid plant for the dehumidification/conditioning of air. International Application published under the Patent Cooperation Treaty (PCT) WO 2012/042553 A1.
3. Isetti, C., Nannei, E., Orlandini, B. "Three-fluid membrane contactors for improving energy efficiency of refrigeration and air-handling systems" Int. Journal of Ambient Energy, Marzo 2013.
4. Isetti, E. Nannei, B. Orlandini "Summer Energy Saving In Indoor Environments Using A New Free-Cooling System", International Conference on Renewable Energies and Power Quality (ICREPQ'10), Granada, 23th to 25th March, 2010
5. C. Isetti, E. Bronzino, E. Nannei, B. Orlandini, "Evaporative refreshing system to control indoor conditions in summer", ASME-ATI-UIT 2010 Conference on Thermal and Environmental Issues in Energy Systems, Sorrento 16 - 19 May, 2010.
6. C. Isetti, E. Nannei, B. Orlandini , "Condensatori evaporativi a membrana per una migliore efficienza energetica dei cicli frigorigeni", Condizionamento dell'aria, riscaldamento, refrigerazione CDA, 5, pp. 12-16, 2012.

In the foregoing, preferred embodiments have been described and variations of the present invention have been suggested, but it is to be understood that those skilled in the field will be able to make modifications and variations without falling outside the relevant scope of protection, as defined in the enclosed claims.

## Claims

1. Contact module (10) operating with three fluids, air, coolant fluid and a liquid phase, said contact module comprising a plurality of plates (1) within which conduits are made for the refrigerant fluid, for example frigorific evaporating fluid, said plurality of plates (1) being disposed in a parallel way thus forming a succession of pairs of plates, the contactor being **characterized in that** within at least a pair of plates there are:
- a first and a second hydrophobic, planar membrane (3) separated and supported by spacing and support means (4) configured (5) to allow the passage of process air perpendicularly to the direction of main extension of said pair of plates (1),
- between said first and second hydrophobic, planar membrane and the respective external surface of said two plates (1) a space is present for the flow of the liquid phase,
at the opposite ends of said plurality of plates (1) being placed respective collectors (2) for the collection of the refrigerant fluid and the liquid phase.

2. Contact module according to claim 1, **characterized in that** on two opposite faces of the contact module, at the ends of said spacing and support means (4) in the direction perpendicular to said plurality of plates (1), a closing material is disposed, for example a hardening resin, to incorporate the end parts of said spacing and support means (4) and seal the spaces between said spacing and support means (4) and those plates (1) facing them.

3. Contact module according to claim 1 or 2, **characterized in that** said spacing and support means (4) are constituted by a plurality of spacing elements substantially perpendicular to said first and second hydrophobic, planar membrane.

4. Contact module according to any claim 1 to 3, **characterized in that** said spacing and support means (4) are constituted by a frame having height between 1 and 10 mm and a length substantially equal to the length of the plates (1) or a integer fraction thereof.

5. Contact module according to any claim 1 to 4, **characterized in that** said liquid phase contains a desiccant solution for the dehumidification and/or cooling of process air, and/or water for humidification of process air.

6. Contact module according to any claim 1 to 5, **characterized in that** between said first and second hydrophobic, planar membrane and the external surfaces of said pair of plates a suitable network is placed, for example in plastic material.

7. Contact module according to any claim 1 to 6, **characterized in that** the spaces between the plates are only partially occupied by the layer formed by said first and second hydrophobic, planar membrane and said spacing and support means (4), the non-utilized spaces along the direction of main extension of said plurality of plates being provided with fins to increase the sensible thermal exchange with air.

8. Integrated plant (300, 400) for the dehumidification and conditioning of air, comprising:
- a conditioning and/or dehumidification unit (20) for the dehumidification and cooling of the air by means of a desiccant solution,
- cooling means (42, 44), connected to said conditioning and/or dehumidification unit (20), suitable to feed said conditioning and/or dehumidification unit (20) with the refrigerant fluid,
**characterized in that**:
- said conditioning and/or dehumidification unit (20) is the contactor module (10) according to any claim 1 to 5;
- a regeneration unit (60) for the regeneration of said a desiccant solution is comprised, which is connected to the conditioning and/or dehumidification unit (20);
- said regeneration unit (60) is suitable to reconcentrate said desiccant solution that comes from the conditioning and/or dehumidification unit (20) where it has been diluted by contact with humidity, discharging outside water and using for such a reconcentration process the condensation thermal energy of the refrigerant fluid, or the energy provided by another thermovector fluid, the reconcentrated desiccant solution being finally returned to said conditioning and/or dehumidification unit (20).

9. Integrated plant according to claim 8, **characterized in that** said regeneration unit (60) comprises a liquid/liquid membrane distillator (61) of the type DCMD/AGMD or thermal recovery AGMD.

10. Integrated plant (300) according to claim 8, **characterized in that** said regeneration unit (60) is constituted by a further contactor module according to any claim 1 to 7.

11. Integrated plant (400) according to any claim 8 to 10, **characterized in that**, when the contactor module is the contactor module (10) according to any claim 1 to 6:
- said refrigerating means (42, 44) feed further separate condensation coils (43) and evaporation coils (41) as well.

12. Integrated plant (400) according to any claim 8 to 11, **characterized in that**:
- said conditioning and/or dehumidification unit (20) dehumidifies a part of the air flow which is subsequently collected and mixed up with the non-dehumidified part so as to create an air mixture,
- said air mixture is cooled down with an exchange coil (41) arranged in series on the air pathway, the exchange coil being fed with a part of the flow of refrigerant fluid coming from said cooling means (42, 44);
- said regeneration unit (60) operates in parallel with a condensing coil (43);
- the exchange of desiccant solution between said conditioning and/or dehumidification unit (20) and said regeneration unit (60), to the end of regenerating the desiccant solution, is effected through suitable conduits.

13. Integrated plant according to claim 12, **characterized in that**:
- the evaporation temperature of the frigorific fluid is the same in said conditioning and/or dehumidification unit (20) and in said separate exchange battery (41);
- the condensation temperature of the frigorific fluid is the same in said regeneration unit (60) and in said separate condensation coil (43).

14. Integrated plant (400) according to any claim 12 or 13, **characterized in that**, when the contactor module is the contactor module (10) according to claim 7:
- said cooling means (42,44) do not comprise the evaporation coil (41) external to the CMCP contactor module (20),
wherein the non-occupied space operates as a traditional refrigerating coil (41) arranged in parallel.

15. Integrated plant (400) according to any claim 12 to 14, **characterized in that**, when the contactor module is the contactor module (10) according to claim 7:
- said cooling means (42,44) do not comprise a condensation coil external to the CMCP contactor module (60),
wherein the non-occupied space operates in parallel as traditional condensation battery (43).

16. Free cooling plant for rooms, c0omprising a free cooling unit for the production of free cooled water for supplying suitable radiant panels to the end of realizing internal comfort conditions in said rooms, said free cooling rooms utilizing a contact module using three fluids, air, refrigerant fluid and liquid phase, the plant being **characterized in that**:
- the contact module (10) is the contact module according to any claim 1 to 7;
- the liquid phase is water that cools by humidifying the air crossing the contact module;
- the refrigerant fluid supplies in closed circuit said radiant panels and is constituted by water.

## Patentansprüche

1. Kontaktmodul (10), das mit drei Fluiden, Luft, Kältefluid und einer flüssigen Phase, arbeitet, wobei das Kontaktmodul eine Vielzahl von Platten (1) umfasst, in denen Leitungen für das Kühlfluid, wie beispielsweise kühltechnisches Verdampfungsfluid, bereitgestellt sind, wobei die Vielzahl von Platten (1) in einer parallelen Weise angeordnet ist, wodurch eine Folge von Plattenpaaren gebildet wird, wobei der Schütz **dadurch gekennzeichnet ist, dass** in mindestens einem Paar von Platten vorliegt:
- eine erste und eine zweite hydrophobe, planare Membran (3), die durch Abstands- und Stützmittel (4) getrennt und gestützt wird, die dafür konfiguriert sind (5), den Durchgang von Prozessluft senkrecht zu der Richtung der Haupterstreckung des Plattenpaares (1) zu ermöglichen,
- zwischen der ersten und zweiten hydrophoben, planaren Membran und der jeweiligen Außenfläche der zwei Platten (1) ist ein Raum für die Strömung der flüssigen Phase vorhanden,
wobei an den entgegengesetzten Enden der Vielzahl von Platten (1) jeweilige Kollektoren (2) zum Sammeln des Kühlfluids und der flüssigen Phase angeordnet sind.

2. Kontaktmodul nach Anspruch 1, **dadurch gekennzeichnet, dass** an zwei gegenüberliegenden Flächen des Kontaktmoduls an den Enden der Abstands- und Stützmittel (4) in der Richtung senkrecht zu der Vielzahl von Platten (1) ein Verschlussmaterial, zum Beispiel ein Härtungsharz angeordnet ist, um die Endteile des Abstands- und Stützmittels (4) zu integrieren und die Räume zwischen den Abstands- und Stützmitteln (4) und jenen Platten (1), die ihnen zugewandt sind, abzudichten.

3. Kontaktmodul nach Anspruch 1 oder 2, **dadurch gekennzeichnet, dass** die Abstands- und Stützmittel (4) aus einer Vielzahl von Abstandselementen gebildet sind, die im Wesentlichen senkrecht zu der ersten und zweiten hydrophoben, planaren Membran angeordnet sind.

4. Kontaktmodul nach einem der Ansprüche 1 bis 3, **dadurch gekennzeichnet, dass** die Abstands- und Stützmittel (4) aus einem Rahmen gebildet sind, der eine Höhe zwischen 1 und 10 mm und eine Länge, die im Wesentlichen gleich der Länge der Platten (1) oder einem ganzzahligen Bruchteil davon ist, aufweist.

5. Kontaktmodul nach einem der Ansprüche 1 bis 4, **dadurch gekennzeichnet, dass** die flüssige Phase eine Trockenmittellösung zur Entfeuchtung und/oder Kühlung von Prozessluft und/oder Wasser zur Befeuchtung von Prozessluft enthält.

6. Kontaktmodul nach einem der Ansprüche 1 bis 5, **dadurch gekennzeichnet, dass** zwischen der ersten und zweiten hydrophoben, planaren Membran und den Außenflächen des Plattenpaares ein geeignetes Netz, beispielsweise aus Kunststoffmaterial, angeordnet wird.

7. Kontaktmodul nach einem der Ansprüche 1 bis 6, **dadurch gekennzeichnet, dass** die Räume zwischen den Platten nur teilweise von der Schicht eingenommen werden, die durch die erste und zweite hydrophobe, planare Membran und die Abstands- und Stützmittel (4) gebildet wird, wobei die nicht genutzten Räume entlang der Richtung der Haupterstreckung der Vielzahl von Platten mit Rippen versehen sind, um den spürbaren Wärmeaustausch mit der Luft zu erhöhen.

8. Integrierte Anlage (300, 400) zur Entfeuchtung und Klimatisierung von Luft, umfassend:
- eine Klimatisierungs- und/oder Entfeuchtungseinheit (20) zur Entfeuchtung und Kühlung der Luft mit Hilfe einer Trockenmittellösung,
- Kühlmittel (42, 44), die mit der Klimatisierungs- und/oder Entfeuchtungseinheit (20) verbunden sind und dafür geeignet sind, der Klimatisierungs- und/oder Entfeuchtungseinheit (20) das Kühlfluid zuzuführen,
**dadurch gekennzeichnet, dass**
- die Klimatisierungs- und/oder Entfeuchtungseinheit (20) das Schützmodul (10) nach einem der Ansprüche 1 bis 5 ist;
- eine Regenerierungseinheit (60) zur Regenerierung der Trockenmittellösung vorgesehen ist, die mit der Klimatisierungs- und/oder Entfeuchtungseinheit (20) verbunden ist;
- die Regenerierungseinheit (60) für ein Aufkonzentrieren der Trockenmittellösung, die aus der Klimatisierungs- und/oder Entfeuchtungseinheit (20) kommt, in der sie durch Kontakt mit Feuchtigkeit verdünnt wurde, Ablassen von Wasser nach außen und Verwenden der Wärmekondensationsenergie des Kühlfluids oder der Energie, die durch ein anderes Wärmeträgeifluid bereitgestellt wird, für einen derartigen Aufkonzentrierungsprozess geeignet ist, wobei die aufkonzentrierte Trockenmittellösung schließlich zu der Klimatisierungs- und/oder Entfeuchtungseinheit (20) zurückgeleitet wird.

9. Integrierte Anlage nach Anspruch 8, **dadurch gekennzeichnet, dass** die Regenerierungseinheit (60) einen Destillator (61) mit Flüssigkeit-Flüssigkeit-Membran des Typs DCMD/AGMD oder des Typs der thermischen Rückgewinnung AGMD umfasst.

10. Integrierte Anlage (300) nach Anspruch 8, **dadurch gekennzeichnet, dass** die Regenerierungseinheit (60) durch ein weiteres Schützmodul nach einem der Ansprüche 1 bis 7 gebildet wird.

11. Integrierte Anlage (400) nach einem der Ansprüche 8 bis 10, **dadurch gekennzeichnet, dass** wenn das Schützmodul das Schützmodul (10) nach einem der Ansprüche 1 bis 6 ist,
- die Kühlmittel (42, 44) ebenfalls weitere separate Kondensationswendeln (43) und Verdampfungswendeln (41) speisen.

12. Integrierte Anlage (400) nach einem der Ansprüche 8 bis 11, **dadurch gekennzeichnet, dass**:
- die Klimatisierungs- und/oder Entfeuchtungseinheit (20) einen Teil der Luftströmung entfeuchtet, die anschließend gesammelt und mit dem nichtentfeuchteten Teil vermischt wird, um ein Luftgemisch zu erzeugen,
- wobei das Luftgemisch mit einer Wärmetauscherwendel (41) abgekühlt wird, die an dem Luftweg in Reihe angeordnet ist, wobei die Wärmetauscherwendel mit einem Teil der Kühlfluidströmung gespeist wird, die aus den Kühlmitteln (42, 44) kommt;
- wobei die Regenerierungseinheit (60) parallel zu einer Kondensationswendel (43) arbeitet;
- wobei der Austausch der Trockenmittellösung zwischen der Klimatisierungs- und/oder Entfeuchtungseinheit (20) und der Regenerierungseinheit (60) zum Zweck der Regenerierung der Trockenmittellösung über geeignete Rohrleitungen erfolgt.

13. Integrierte Anlage nach Anspruch 12, **dadurch gekennzeichnet, dass**:
- die Verdampfungstemperatur des kühltechnischen Fluids in der Klimatisierungs- und/oder Entfeuchtungseinheit (20) und in der separaten Austauschbatterie (41) die gleiche ist, und
- die Kondensationstemperatur des kühltechnischen Fluids in der Regenerierungseinheit (60) und in der getrennten Kondensationswendel (43) die gleiche ist.

14. Integrierte Anlage (400) nach einem der Ansprüche 12 oder 13, **dadurch gekennzeichnet, dass** wenn das Schützmodul das Schützmodul (10) nach Anspruch 7 ist,
- die Kühlmittel (42, 44) nicht die Verdampfungswendel (41) außerhalb des CMCP-Schützmoduls (20) umfassen, wobei
der nicht-belegte Raum als parallel angeordnete traditionelle Kühlwendel (41) arbeitet.

15. Integrierte Anlage (400) nach einem der Ansprüche 12 bis 14, **dadurch gekennzeichnet, dass** wenn das Schützmodul das Schützmodul (10) nach Anspruch 7 ist,
- die Kühlmittel (42, 44) keine Kondensationswendel außerhalb des CMCP-Schützmoduls (60) umfassen,
wobei der nicht-belegte Raum parallel als herkömmliche Kondensationsbatterie (43) arbeitet.

16. Frei bewegliche Kühlanlage für Räume, die eine frei bewegliche Kühleinheit zur Erzeugung von freiem abgekühltem Wasser zur Versorgung von geeigneten Strahlplatten zur Erzeugung von Innenraum-Komfortbedingungen in den Räumen umfasst, wobei die frei gekühlten Räume ein Kontaktmodul verwenden, das die drei Fluide, Luft, Kühlfluid und eine flüssige Phase verwendet, wobei die Anlage **dadurch gekennzeichnet ist, dass**
- das Kontaktmodul (10) das Kontaktmodul nach einem der Ansprüche 1 bis 7 ist;
- die flüssige Phase Wasser ist, das durch Befeuchtung der Luft, die das Kontaktmodul durchströmt, kühlt;
- das Kühlfluid die Strahlplatten im geschlossenen Kreislauf versorgt und aus Wasser besteht.

## Revendications

1. Module de contact (10) fonctionnant avec trois fluides, de l'air, un fluide de refroidissement et une phase liquide, ledit module de contact comprenant une pluralité de plaques (1) à l'intérieur desquelles des conduits sont formés pour le fluide réfrigérant, par exemple un fluide d'évaporation frigorifique, ladite pluralité de plaques (1) étant disposée en parallèle afin de former une succession de paires de plaques, le contacteur étant **caractérisé en ce que**, dans au moins une paire de plaques, se trouvent :
- une première et une deuxième membranes planes hydrophobes (3) séparées et supportées par des moyens d'espacement et de support (4) configurés (5) pour permettre le passage d'un air de traitement perpendiculairement à la direction d'extension principale de ladite paire de plaques (1),
- un espace présent, entre lesdites première et deuxième membranes planes hydrophobes et la surface externe respective desdites deux plaques (1), pour l'écoulement de la phase liquide,
des collecteurs respectifs (2) pour la collecte du fluide réfrigérant et de la phase liquide étant placés aux extrémités opposées de ladite pluralité de plaques (1).

2. Module de contact selon la revendication 1, **caractérisé en ce que**, sur deux faces opposées du module de contact, aux extrémités desdits moyens d'espacement et de support (4) dans la direction perpendiculaire à ladite pluralité de plaques (1), est disposé un matériau de fermeture, par exemple une résine durcissable, pour incorporer les parties d'extrémité desdits moyens d'espacement et de support (4) et obturer les espaces entre lesdits moyens d'espacement et de support (4) et les plaques (1) qui leur font face.

3. Module de contact selon la revendication 1 ou 2, **caractérisé en ce que** lesdits moyens d'espacement et de support (4) sont constitués d'une pluralité d'éléments d'espacement essentiellement perpendiculaires auxdites première et deuxième membranes planes et hydrophobes.

4. Module de contact selon l'une quelconque des revendications 1 à 3, **caractérisé en ce que** lesdits moyens d'espacement et de support (4) sont constitués d'un cadre ayant une hauteur comprise entre 1 et 10 mm et une longueur essentiellement égale à la longueur des plaques (1) ou à une fraction entière de celle-ci.

5. Module de contact selon l'une quelconque des revendications 1 à 4, **caractérisé en ce que** ladite phase liquide continent une solution déshydratante pour la déshumidification et/ou le refroidissement de l'air de traitement, et/ou de l'eau pour l'humidification de l'air de traitement.

6. Module de contact selon l'une quelconque des revendications 1 à 5, **caractérisé en ce qu'**un réseau approprié, par exemple en matériau plastique, est placé entre lesdites première et deuxième membranes planes hydrophobes et les surfaces externes de ladite paire de plaques.

7. Module de contact selon l'une quelconque des revendications 1 à 6, **caractérisé en ce que** les espaces entre les plaques ne sont que partiellement occupés par la couche formée par lesdites première et deuxième membranes planes hydrophobes et lesdits moyens d'espacement et de support (4), les espaces non utilisés le long de la direction d'extension principale de ladite pluralité de plaques étant pourvus d'ailettes pour augmenter l'échange thermique sensible avec l'air.

8. Installation intégrée (300, 400) pour la déshumidification et le conditionnement d'air, comprenant :
- une unité de conditionnement et/ou de déshumidification (20) pour la déshumidification et le refroidissement de l'air au moyen d'une solution déshydratante,
- des moyens de refroidissement (42, 44), connectés à ladite unité de conditionnement et/ou de déshumidification (20), appropriés pour alimenter ladite unité de conditionnement et/ou de déshumidification (20) avec le fluide réfrigérant,
**caractérisée en ce que** :
- ladite unité de conditionnement et/ou de déshumidification (20) est le module contacteur (10) selon l'une quelconque des revendications 1 à 5;
- il est compris une unité de régénération (60) pour la régénération de ladite solution déshydratante, qui est connectée à l'unité de conditionnement et/ou de déshumidification (20) ;
- ladite unité de régénération (60) est appropriée pour reconcentrer ladite solution déshydratante qui provient de l'unité de conditionnement et/ou de déshydratation (20) où elle a été diluée par contact avec de l'humidité, décharger l'eau vers l'extérieur et utiliser pour une telle opération de reconcentration l'énergie thermique de condensation du fluide réfrigérant, ou l'énergie fournit par un autre fluide thermovecteur, la solution déshydratante reconcentrée étant finalement renvoyée à ladite unité de conditionnement et/ou de déshumidification (20).

9. Installation intégrée selon la revendication 8, **caractérisée en ce que** ladite unité de régénération (60) comprend un distillateur à membrane liquide / liquide (61) du type DCMD/AGMD ou AGMD à récupération thermique.

10. Installation intégrée (300) selon la revendication 8, **caractérisée en ce que** ladite unité de régénération (60) est constituée d'un autre module contacteur selon l'une quelconque des revendications 1 à 7.

11. Installation intégrée (400) selon l'une quelconque des revendications 8 à 10, **caractérisée en ce que**, lorsque le module contacteur est le module contacteur (10) selon l'une quelconque des revendications 1 à 6:
- lesdits moyens de réfrigération (42, 44) alimentent en outre des bobines de condensation (43) ainsi que des bobines d'évaporation (41) séparées.

12. Installation intégrée (400) selon l'une quelconque des revendications 8 à 11, **caractérisée en ce que** :
- ladite unité de conditionnement et/ou de déshumidification (20) déshumidifie une partie du flux d'air qui est ensuite collectée et mélangée avec la partie non-déshumidifiée de façon à créer un mélange d'air,
- ledit mélange d'air est refroidi à l'aide d'une bobine d'échange (41) disposée en série sur le trajet de l'air, la bobine d'échange étant alimentée avec une partie du flux du fluide réfrigérant provenant desdits moyens de refroidissement (42, 44) ;
- ladite unité de régénération (60) fonctionne en parallèle avec une bobine de condensation (43) ;
- l'échange de solution déshydratante entre ladite unité de conditionnement et/ou de déshumidification (20) et ladite unité de régénération (60), à la fin de la régénération de la solution déshydratante, est effectué via des conduits appropriés.

13. Installation intégrée selon la revendication 12, **caractérisée en ce que** :
- la température d'évaporation du fluide frigorifique est la même dans ladite unité de conditionnement et/ou de déshumidification (20) et dans ladite batterie d'échange séparée (41) ;
- la température de condensation du fluide frigorifique est la même dans ladite unité de régénération (60) et dans ladite bobine de condensation séparée (43).

14. Installation intégrée (400) selon l'une quelconque des revendications 12 ou 13, **caractérisée en ce que**, lorsque le module contacteur est le module contacteur (10) selon la revendication 7 :
- lesdits moyens de refroidissement (42, 44) ne comprennent pas la bobine d'évaporation (41) externe au module contacteur CMCP (20), l'espace non-occupé fonctionnant comme une bobine de réfrigération traditionnelle (41) agencée en parallèle.

15. Installation intégrée (400) selon l'une quelconque des revendications 12 à 14, **caractérisée en ce que**, lorsque le module contacteur est le module contacteur (10) selon la revendication 7 :
- lesdits moyens de refroidissement (42, 44) ne comprennent pas de bobine d'évaporation externe au module contacteur CMCP (60),
l'espace non-occupé fonctionnant en parallèle comme une batterie de condensation traditionnelle (43).

16. Installation pour le refroidissement naturel de pièces, comprenant une unité de refroidissement naturel pour la production d'eau refroidie naturellement pour alimenter de façon appropriée des panneaux radiants afin de produire des conditions de confort interne dans lesdites pièces, lesdites pièces à refroidissement naturel utilisant un module de contact utilisant trois fluides, de l'air, un fluide réfrigérant et une phase liquide, l'installation étant **caractérisée en ce que** :
- le module de contact (10) est le module de contact selon l'une quelconque des revendications 1 à 7 ;
- la phase liquide est de l'eau qui refroidit par humidification l'air rencontrant le module de contact ;
- le fluide réfrigérant alimente lesdits panneaux radiants en circuit fermé et est constitué par de l'eau.
